Europäisches Patentamt

European Patent Office

Office européen des brevets

(11) Publication number: **0 430 370 B1**

(12) **EUROPEAN PATENT SPECIFICATION**

(45) Date of publication of patent specification: **16.08.95**   (51) Int. Cl.⁶: **A62D 3/00**, B09B 3/00

(21) Application number: **90203118.6**

(22) Date of filing: **24.11.90**

(54) **Process for purifying contaminated soil.**

(30) Priority: **01.12.89 IT 2256989**

(43) Date of publication of application:
**05.06.91 Bulletin 91/23**

(45) Publication of the grant of the patent:
**16.08.95 Bulletin 95/33**

(84) Designated Contracting States:
**AT BE CH DE DK ES FR GB GR LI LU NL SE**

(56) References cited:
**EP-A- 0 334 078
DE-A- 3 245 811
DE-U- 8 704 276
US-A- 4 832 806**

**PATENT ABSTRACTS OF JAPAN vol. 9, no.
267 (C-310)(1990) October 24, 1985 & JP-A
-60118239 (GIKEN KOGYO KK) June 25, 1985**

**SOLAR ENERGY MATERIALS. vol. 14, 1986,
AMSTERDAM NL pages 121 - 127; SERPONE
ETAL: 'PHOTOCATALYSIS OVER TIO2 SUP-
PORTED ON A GLASS SUBSTRATE '**

(73) Proprietor: **ENIRICERCHE S.p.A.
Corso Venezia 16
I-20121 Milan (IT)**

(72) Inventor: **Pelizzetti, Ezio
Corso Racconigi 162
I-10129 Torino (IT)**
Inventor: **Carlin, Wilma
Viale Bacchiglione 22
I-20139 Milan (IT)**
Inventor: **Minero, Claudio
Via Ignazio Vianna 18
I-12035 Racconigi,
Cuneo (IT)**
Inventor: **Borgarello, Enrico
Corso Grosseto 274
I-10151 Torino (IT)**
Inventor: **Miano, Fausto
Via Trapani 6
I-94100 Enna (IT)**

(74) Representative: **Fusina, Gerolamo et al
Ing. Barzanò & Zanardo Milano S.p.A,
Via Borgonuovo, 10
I-20121 Milano (IT)**

ENVIRONMENTAL SCIENCE AND TECHNOL-
OGY. vol. 19, no. 6, 1985, EASTON, PA US
pages480 - 484; OLLIS: 'CONTAMINANT DEG-
RADATION IN WATER '

ENVIRONMENTAL PROGRESS vol. 8, no. 1,
February 1989, US pages 46 - 51;MCDER-
MOTT ET AL: 'TWO STRATEGIES FOR PCB
SOIL REMEDIATION: BIODEGRADATION AN-
DSURFACTANT EXTRACTION '

## Description

A method is described for purifying soil containing contaminants. This method consists of withdrawing the soil, forming it into an aqueous suspension and then irradiating it with light radiation having a wavelength less than 500 nm in the presence of a semiconductor as catalyst.

The current methods available for purifying contaminated soil include for example biodegradation and extraction, both conducted in dispersion (McDermott et al.,Environmental Progress, vol. 8, No. 1, 1989). The first method consists of degrading the contaminants with bacteria, while the second consists of extracting the contaminants from the soil using for example aqueous solutions of surfactants.

We have now discovered a method for purifying soil containing organic contaminants consisting of subjecting the soil to light radiation of wavelength less than 500 nm in the presence of a semiconductor as catalyst. The irradiation is conducted on the soil after this has been dispersed in water.

It is already known to purify contaminated water by photocatalytic processes (D. Ollis, Environ. Sci. Technol. vol. 19 No. 6, 1985). This purification is conducted by subjecting the contaminated water to a photodegradation process in the presence of a semiconductor as catalyst.

Under these conditions the semiconductor absorbs the radiation with the consequent promotion of an electron in the conduction band and the formation of an electronic void in the valence band. Both these reactive species can migrate to the catalyst surface where they are able to induce redox reactions on the contaminant substances as they are adsorbed. In particular, these substances can be converted into other less toxic substances or be completely mineralized, ie transformed into carbon dioxide and water.

We have now surprisingly found that by means of a photocatalytic process it is possible to purify a soil on which contaminant substances have been adsorbed. The present invention therefore provides a method for purifying contaminated soil consisting of irradiating the soil in aqueous suspension with radiation having a wavelength less than 500 nm, in the presence of a semiconductor as catalyst.

The prior art does not suggest the possibility of degrading contaminant substances adsorbed on soil by heterogeneous photocatalysis, and in fact this represents totally unexpected behaviour. In this respect, because of their low coefficient of distribution in water such substances should tend to remain adsorbed on the soil and be therefore unable to reach the catalyst surface on which the degradation processes take place. It is also known that, for example, sediments and clays are able to absorb in the ultraviolet region and therefore, even if there were no other obstacles to the contaminant reaching the catalyst, it could well have been expected that the soil would compete with the catalyst in absorbing the radiation, so resulting in a reaction rate too low for practical use.

The process of our invention is implemented by forming the contaminated soil into a aqueous suspension in a reactor and then subjecting it to irradiation by a lamp emitting radiation at a wavelength less than 500 nm, in the presence of a semiconductor as catalyst.

Semiconductors which can be used as catalysts in this process are titanium dioxide, zinc oxide and iron oxide.

These catalysts are dispersed in water and can be in colloidal, powder or microbead form, or be suitably supported.

In the first case the semiconductors can for example be in the form of particles having a size of between 0.01 and 1 $\mu$, and in the second case be in the form of particles having a size of between 1 and 100 $\mu$.

The microbeads can for example have a diameter of between 0.1 and 5.0 mm.

The semiconductor microbeads of titanium dioxide are obtained by:

(a) preparing an alcoholic solution with a relatively high viscosity of an organometallic compound of titanium;

(b) possibly thickening such a solution by means of the addition of an organic polymer;

(c) subdividing the solution into droplets which are solidified into gel-particles by contact with an alkaline solution in an anhydrous environment, or in an environment with a controlled water content;

(d) drying and/or calcining the gel particles.

In the case of supported catalysts glass can for example be used as the support.

The water-dispersed catalysts in colloidal or powder form are used at a concentration of between 0.5 and 10 g/l. The catalysts in microbead or supported form are used at a concentration of between 0.5 and 50 g/l.

Suitable lamps are those which emit radiation with a wavelength less than 500 nm and preferably between 320 and 450 nm. These lamps can be high or low pressure xenon or mercury vapour lamps.

Air or oxygen can be blown into the reactor during the process. The process can be either continuous or batch.

EP 0 430 370 B1

The reactors usable in the present invention are those already described for photocatalytic processes in aqueous solution. Thus they can be for example of the immersion type, ie in which a lamp is immersed into the reaction mixture in a conventional chemical reactor through the top, or be for example of annular type, ie formed from two coaxial cylinders which define the reaction zone, with the lamp arranged on the axis of symmetry.

On termination of the process the aqueous suspension is filtered and the catalyst recovered from the soil, for example by gravimetric separation or flotation.

Soils of different type and composition can be purified using the process of the present invention. For example quartziferous, clay, schistose, sandy and other soils can be purified.

The quantity of soil which can be present in the reaction environment is between 1 and 500 g/l, and preferably between 2 and 50 g/l.

Depending on their type, organic contaminants can be converted into less toxic compounds or be completely mineralized.

The following examples are provided merely to better illustrate the method of the present invention and must in no case be interpreted as limiting the scope thereof.

EXAMPLE 1

In this example a soil contaminated with atrazine is subjected to photodegradation. The herbicide is converted into cyanuric acid, a non-toxic compound. 2 g/l of astian soil containing 20 ppm of atrazine are placed in a 100 ml reactor fitted with a 1000 W xenon vapour lamp and containing 50 ml of a 0.5 g/l dispersion of $TiO_2$ in water. The following table shows the results obtained:

| ppm atrazine | time (min) |
|---|---|
| 20.5 | 0 |
| 14.5 | 5 |
| 10.2 | 15 |
| 2.2 | 30 |
| 0.1 | 60 |
| <0.1 | 120 |

EXAMPLE 2

The preceding example is repeated under the same conditions but using zinc oxide as catalyst. The following table shows the results obtained:

| ppm atrazine | time (min) |
|---|---|
| 23.0 | 0 |
| 14.4 | 60 |
| 10.0 | 120 |
| 8.0 | 180 |
| 6.0 | 240 |

4

EXAMPLE 3

Example 1 is repeated under the same conditions but using iron oxide as catalyst.
The following table shows the results obtained:

| ppm atrazine | time (min) |
|:---:|:---:|
| 23 | 0 |
| 18 | 60 |
| 12 | 120 |
| 10 | 240 |

EXAMPLES 4-8

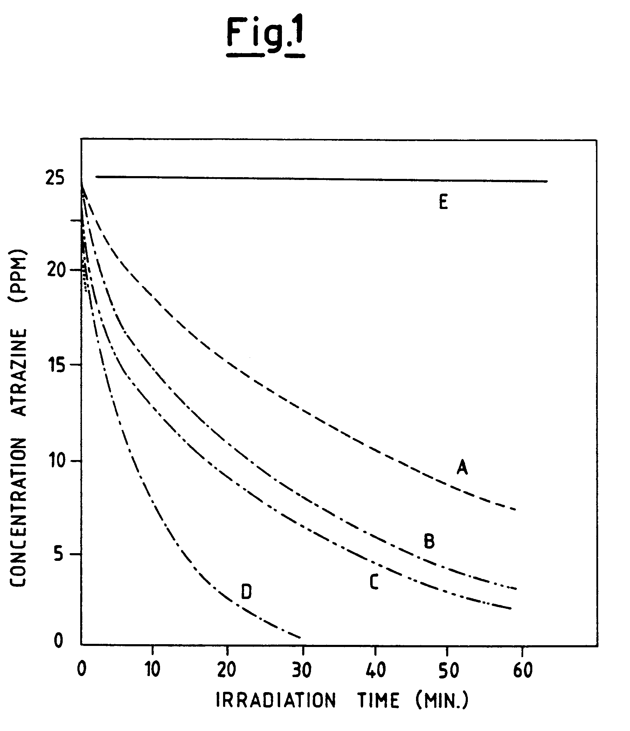

Operating under the same conditions as Example 1, soils of different type contaminated with 25 ppm of atrazine are subjected to photodegradation in the presence of 0.5 g/l of colloidal $TiO_2$. The soil concentration within the reaction environment is 2 g/l. The results obtained are shown in Figure 1.
The soil types used are: clay soil (curve A), astian soil (curve B), river soil (curve C) and quartziferous soil (curve D). Curve E shows the degradation in the absence of catalyst.

EXAMPLE 9

In this example a clay soil contaminated with 2-chlorophenol is subjected to photodegradation. In this case complete mineralization of the contaminant is obtained. The procedure is carried out under the same conditions as in Examples 4-7, using colloidal $TiO_2$ as catalyst. The following table shows the results obtained:

| ppm 2-chlorophenol | time (min) |
|:---:|:---:|
| 15.5 | 0 |
| 11.5 | 10 |
| 8.7 | 30 |
| 2.4 | 60 |
| <0.1 | 120 |

EXAMPLE 10

A clay soil contaminated with 2-chlorophenol is subjected to photocatalytic treatment under the same conditions as in Example 1, using powdered $TiO_2$ as catalyst.

5

The following table shows the results obtained:

| ppm 2-chlorophenol | time (min) |
|:---:|:---:|
| 15.5 | 0 |
| 13.0 | 15 |
| 11.0 | 30 |
| 9.8 | 60 |
| 5.5 | 120 |
| 2.0 | 240 |

EXAMPLES 11-14

In these examples a clay soil contaminated with 2-chlorophenol ($1.5 \times 10^{-4}$ g/l) is subjected to purification by photodegradation. The photocatalytic treatment was effected under the same conditions as in Examples 4-7.

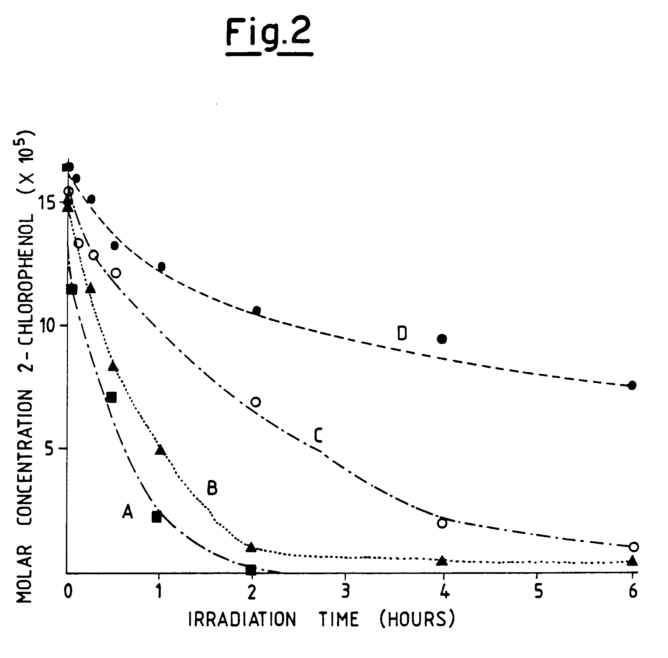

Figure 2 shows the results obtained on varying the soil concentration and the $TiO_2$ concentration:

| | soil concentration (g/l) | $TiO_2$ concentration (g/l) |
|---|:---:|:---:|
| curve A | 50 | 10 |
| curve B | 20 | 5 |
| curve C | 20 | 2 |
| curve D | 20 | 0.5 |

EXAMPLE 15

A clay soil contaminated with 2-chlorophenol is subjected to photocatalytic treatment under the same conditions as in Example 1, using $TiO_2$ microbeads prepared as described in IT 25-516/81, corresponding to GB-A-2 112 764, as catalyst.

The catalyst concentration is 20 g/l.

The following table shows the results obtained:

| ppm 2-chlorophenol | time (min) |
| --- | --- |
| 15.5 | 0 |
| 14.0 | 15 |
| 12.0 | 30 |
| 11.0 | 60 |
| 9.0 | 120 |

EXAMPLE 16

A clay soil contaminated with 2-chlorophenol is subjected to photocatalytic treatment under the same conditions as in Example 1, using $TiO_2$ supported on glass, prepared as described in Solar Energy Material 14, 121 (1986), as catalyst.

The catalyst concentration is 30 g/l.

The following table shows the results obtained:

| ppm 2-chlorophenol | time (min) |
| --- | --- |
| 15.5 | 0 |
| 15.0 | 15 |
| 14.0 | 30 |
| 12.0 | 60 |
| 10.0 | 120 |

**Claims**

1. A method for purifying contaminated soil, consisting of suspending said soil in water and subjecting it to radiation of wavelength less than 500 nm in the presence of a semiconductor as catalyst, chosen from titanium dioxide, zinc oxide and iron oxide.

2. A method as claimed in claim 1, wherein the radiation is of a wavelength between 450 and 320 nm.

3. A method as claimed in claims 1 and 2, wherein the radiation is emitted by a high or low pressure xenon or mercury vapour arc lamp.

4. A method as claimed in claim 1, wherein the semiconductor is titanium dioxide.

5. A method as claimed in claim 1, wherein the semiconductor dispersed in water is in colloidal or powder form.

6. A method as claimed in claim 5, wherein the semiconductor is used in a concentration of between 0.5 and 10 g/l.

**7.** A method as claimed in claim 1, wherein the semiconductor dispersed in water is in microbead or supported form.

**8.** A method as claimed in claim 7, wherein the semiconductor is used in a concentration of between 0.5 and 50 g/l.

**9.** A method as claimed in claim 5, wherein the semiconductor is in colloidal form as particles having a size of between 0.01 and 1 $\mu$m.

**10.** A method as claimed in claim 5, wherein the semiconductor is in powder form as particles having a size greater than 1 $\mu$m but less than 100 $\mu$m.

**11.** A method as claimed in claim 7, wherein the semiconductor is in the form of microbeads of diameter between 0.1 and 5.0 mm.

**12.** A method as claimed in claim 7, wherein the semiconductor microbeads of titanium dioxide are obtained by:
(a) preparing an alcoholic solution with a relatively high viscosity of an organometallic compound of titanium;
(b) possibly thickening such a solution by means of the addition of an organic polymer;
(c) subdividing the solution into droplets which are solidified into gel-particles by contact with an alkaline solution in an anhydrous environment, or in an environment with a controlled water content;
(d) drying and/or calcining the gel particles.

**13.** A method as claimed in claim 7, wherein the semiconductor is supported on glass.

**14.** A method as claimed in claim 1, wherein the concentration of contaminated soil in water is between 1 and 500 g/l.

**15.** A method as claimed in claim 14, wherein the concentration of contaminated soil in water is between 2 and 50 g/l.

**16.** A method as claimed in claim 1, wherein the radiation has a wavelength of between 380 and 320 nm and the semiconductor is titanium dioxide.

**17.** A method as claimed in claim 1, wherein air or oxygen is blown into the aqueous suspension during treatment.

**Patentansprüche**

**1.** Verfahren zur Reinigung von kontaminiertem Boden, bestehend aus einem Suspendieren des Bodens in Wasser und einem Bestrahlen mit einer Wellenlänge von unter 500 nm in Anwesenheit eines unter Titandioxid, Zinkoxid und Eisenoxid ausgewählten Halbleiters als Katalysator.

**2.** Verfahren nach Anspruch 1, worin die Bestrahlung mit einer Wellenlänge von 450 bis 320 nm vorgenomnen wird.

**3.** Verfahren nach Anspruch 1 oder 2, worin die Strahlung von einer Hochdruck- oder Niederdruck-Xenon- oder -Quecksilberdampflampe emittiert wird.

**4.** Verfahren nach Anspruch 1, worin der Halbleiter Titandioxid ist.

**5.** Verfahren nach Anspruch 1, worin der in Wasser dispergierte Halbleiter in kolloidaler oder in pulveriger Form vorliegt.

**6.** Verfahren nach Anspruch 5, worin der Halbleiter in einer Konzentration von 0,5 bis 10 g/l angewendet wird.

7. Verfahren nach Anspruch 1, worin der in Wasser dispergierte Halbleiter in Mikrokügelchen- oder Trägerforn vorliegt.

8. Verfahren nach Anspruch 7, worin der Halbleiter in einer Konzentration von 0,5 bis 50 g/l angewendet wird.

9. Verfahren nach Anspruch 5, worin der Halbleiter in kolloidaler Form als Teilchen mit einer Größe von 0,01 bis 1 $\mu$m vorliegt.

10. Verfahren nach Anspruch 5, worin der Halbleiter in Pulverform als Teilchen mit einer Größe von über 1 $\mu$m aber unter 100 $\mu$m vorliegt.

11. Verfahren nach Anspruch 7, worin der Halbleiter in Form von Mikrokügelchen mit einem Durchmesser von 0,1 bis 5,0 mm vorliegt.

12. Verfahren nach Anspruch 7, worin die Halbleiter-Mikrokügelchen von Titandioxid durch folgende Schritte erhalten werden:
(a) Bereiten einer alkoholischen Lösung einer Organometallverbindung von Titan mit einer verhältnismäßig hohen Viskosität;
(b) gegebenenfalls Verdicken der erhaltenen Lösung durch Zusetzen eines organischen Polymers;
(c) Feinverteilung der Lösung zu Tröpfchen, die durch Kontakt mit einer alkalischen Lösung in einer wasserfreien Umgebung oder in einer Umgebung mit einem kontrollierten Wassergehalt zu Gelteilchen verfestigt werden;
(d) Trocknen und/oder Calcinieren der Gelteilchen.

13. Verfahren nach Anspruch 7, worin der Halbleiter auf Glas als Träger aufgebracht ist.

14. Verfahren nach Anspruch 1, worin die Konzentration des kontaminierten Bodens in Wasser von 1 bis 500 g/l beträgt.

15. Verfahren nach Anspruch 14, worin die Konzentration des kontaminierten Bodens in Wasser von 2 bis 50 g/l beträgt.

16. Verfahren nach Anspruch 1, worin die Strahlung eine Wellenlänge von 380 bis 320 nm aufweist und der Halbleiter Titandioxid ist.

17. Verfahren nach Anspruch 1, worin während der Behandlung Luft oder Sauerstoff in die wäßrige Suspension eingeblasen wird.

**Revendications**

1. Procédé de purification de sois contaminés, consistant à mettre ledit sol en suspension dans de l'eau et à le soumettre à un rayonnement ayant une longueur d'onde inférieure à 500 nm en présence d'un semiconducteur choisi parmi le dioxyde de titane, l'oxyde de zinc et l'oxyde de fer, jouant le rôle de catalyseur.

2. Procédé conforme à la revendication 1 dans lequel le rayonnement a une longueur d'onde comprise entre 450 et 320 nm.

3. Procédé conforme à la revendication 1 et 2 dans lequel le rayonnement est émis par une lampe à décharge à xénon ou à vapeur de mercure faible pression ou haute pression.

4. Procédé conforme à la revendication 1 dans lequel le semiconducteur est le dioxyde de titane.

5. Procédé conforme à la revendication 1 dans lequel le semiconducteur dispersé dans de l'eau est sous forme colloïdale ou sous forme de poudre.

6. Procédé conforme à la revendication 5 dans lequel le semiconducteur est utilisé en une concentration comprise entre 0,5 et 10 g/l.

7. Procédé conforme à la revendication 1 dans lequel le semiconducteur dispersé dans de l'eau est sous forme de microbilles ou fixé sur un support.

8. Procédé conforme à la revendication 7 dans lequel le semiconducteur est utilisé en une concentration comprise entre 0,5 et 50 g/l.

9. Procédé conforme à la revendication 5 dans lequel le semiconducteur est sous forme colloïdale, les particules ayant une taille comprise entre 0,01 et 1 $\mu$m.

10. Procédé conforme à la revendication 5 dans lequel le semiconducteur est sous forme de poudre de particules ayant une taille supérieure à 1 $\mu$m mais inférieure à 100 $\mu$m.

11. Procéde conforme à la revendication 7 dans lequel le semiconducteur est sous forme de microbilles ayant un diamètre compris entre 0,1 et 5,0 mm.

12. Procédé conforme à la revendication 7 dans lequel les microbilles de semiconducteur en dioxyde de titane sont obtenues par
(a) préparation d'une solution alcoolique d'un composé organométallique de titane ayant une viscosité relativement importante,
(b) épaississement éventuel d'une telle solution par addition d'un polymère organique,
(c) division de la solution en gouttelettes qui sont solidifiées sous forme de particules de gel par contact avec une solution alcaline dans un environnement anhydre ou dans un environnement ayant une teneur d'eau déterminée,
d) séchage et/ou calcination des particules de gel

13. Procédé conforme à la revendication 7 dans lequel le semiconducteur est fixé sur un support en verre.

14. Procédé conforme à la revendication 1 dans lequel la concentration de sol contaminé dans l'eau est comprise entre 1 et 500 g/l.

15. Procédé conforme à la revendication 14 dans lequel la concentration de sol contaminé dans l'eau est comprise entre 2 et 50 g/l.

16. Procédé conforme à la revendication 1 dans lequel le rayonnement a une longueur d'onde comprise entre 380 et 320 nm et le semiconducteur est le dioxyde de titane.

17. Procédé conforme à la revendication 1 dans lequel on fait passer de l'air ou de l'oxygène dans la suspension aqueuse pendant le traitement.

# Fig.1

# Fig.2